# EUROPÄISCHE PATENTANMELDUNG

(11) **EP 1 065 184 A1**
(43) Veröffentlichungstag der Anmeldung: **03.01.2001**
(21) Anmeldenummer: 00112471.8
(22) Anmeldetag: 10.06.2000
(51) Int. Cl.: C04B 7/40

(54) **Anlage zur Herstellung von Zementklinker**

(30) Priorität: 25.06.1999 DE 19929066
(71) Anmelder: KHD Humboldt-Wedag AG, 51103 Köln (DE)
(72) Erfinder: Rawe, Klaus, 51109 Köln (DE)

(57) **Zusammenfassung**

Bei der Herstellung von Zementklinker aus nassen schlammförmigen Rohmaterialien, die nach ihrer Aufbereitung dann in einem Trockendrehrohrofen (15) mit vorgeschaltetem Zyklonschwebegas-Wärmetauschersystem (13) zu Zementklinker gebrannt werden, ist es erforderlich, den Rohmehlschlamm zunächst auf eine Feuchte von ca. 20 % mechanisch zu entwässern und danach auf eine Restfeuchte von etwa 0,5 bis 1,0 % thermisch zu trocknen. Gemäß der Erfindung wird vorgeschlagen, diese thermische Trocknung in einem statischen Kaskaden-Stufentrockner (10) durchzuführen, wobei zur Trocknung Heißgas (14) aus den Zyklonwärmetauschern (13) im Querstrom durch den Stufentrockner (10) geführt wird.

## Beschreibung

Die Erfindung betrifft eine Anlage zur Herstellung von Zementklinker aus nassen schlammförmigen Rohmaterialien, die mechanisch entwässert, getrocknet, in einem Zyklonschwebegas-Wärmetauschersystern erhitzt, in einer Calcinierstufe calciniert, in einem Drehofen zu Zementklinker gebrannt und in einem Klinkerkühler gekühlt werden.

Ein bekanntes Verfahren der Zementklinkerherstellung, das Naßverfahren, besteht darin, die verwendeten nassen Rohstoffe gemeinsam in Naßdrehrohrmühlen zu vermahlen, um auf diese Weise einen feinkörnigen und innig vermischten Rohschlamm zu erhalten. Dieser Rohschlamm wird dann direkt in einem Naßdrehrohrofen, ggf. mit Ketteneinbauten, zu Klinker gebrannt oder aber nach einer mechanischen Vorentwässerung zu Pellets geformt, die dann im Drehrohrofen gebrannt werden.

Im Laufe der Zeit hat sich das thermisch günstigere Trockenverfahren durchgesetzt, bei dem trocken vermahlene Rohstoffe in einem Drehrohrofen mit vorgeschaltetem Zyklonschwebegas-Wärmetauschersystern zu Zementklinker gebrannt werden.

Beim Umbau vorhandener Naßanlagen in moderne Trockenanlagen ist es bekannt, die Naßaufbereitung des Rohmaterials beizubehalten und das schlammförmig vorliegende Rohmaterial (Rohmehlschlamm) durch eine mechanische und anschließende thermische Entwässerung in den für die Aufgabe in die Zyklonwärmetauscher erforderlichen Trockengrad zu überführen.

So ist es beispielsweise bekannt, den Rohschlamm aus den Naßmühlen über eine mechanische Entwässerung in Form von Filterpressen, Trommelfilter etc. von seiner pumpfähigen Feuchte auf eine Feuchte von ca. 20 % zu bringen. Die thermische Trocknung des erhaltenen Filterkuchens auf die erforderliche Restfeuchte von vorzugsweise 0,5 bis 1,0 % erfolgt dann beispielsweise in einem Flugstromtrockner, bestehend aus Prallhammerbrecher, Steigleitung und Abscheider. Bekannt ist ferner, die thermische Trocknung in einem Trommeltrockner oder in Schnelltrocknern mit Wurfschaufeln oder in Pralltrocknern durchzuführen.

Nachteilig bei den genannten Trocknungsanlagen, die eigentlich für die Mahltrocknung konzipiert sind, ist der für die Trocknung des Filterkuchens getriebene apparative Aufwand durch den Einsatz rotierender Maschinenteile. So muß beispielsweise der Prallhammerbrecher des Flugstromtrockners in seiner Leistungsaufnahme so dimensioniert werden, daß die Hämmer auch bei nicht ausreichender Trocknungsleistung durch das noch feuchte Material am Prallhammerbrecherboden durchgezogen werden.

Aus der EP-B-0 650 763 ist eine Kreislaufmahlanlage mit einer Hochdruck-Walzenpresse zur Gutbettzerkleinerung des Aufgabegutes und mit einem statischen Kaskadensichter bekannt, der nach dem Prinzip eines Querstromsichters arbeitet, der mit Luft und bei zu mahlendem feuchten Aufgabegut auch mit Heißgas betrieben werden kann, so daß dann die Mahlanlage zur Mahltrocknung genutzt wird. Nicht bekannt ist, eine solche Kreislaufmahlanlage oder Teile davon beim sogenannten Naßverfahren zur Herstellung von Zementklinker aus nassen schlammförmigen Rohmaterialien einzusetzen.

Es ist Aufgabe der Erfindung, bei der Herstellung von Zementklinker aus nassen schlammförmigen Rohmaterialien die thermische Trocknung des Filterkuchens anlagenmäßig so zu gestalten, daß mit geringem Konstruktions- und Kostenaufwand die Trocknung an die spezifischen Eigenschaften des feinkörnigen Filterkuchens und an das Trocknungsziel der Herstellung eines zur Aufgabe in das ZyklonSchwebegas-Wärmetauschersystem geeigneten Rohmehls angepaßt ist.

Diese gestellte Aufgabe wird erfindungsgemäß mit den Maßnahmen des Kennzeichnungsteils des Anspruchs 1 gelöst. Vorteilhafte Ausgestaltungen der Erfindung sind in den Unteransprüchen angegeben.

Durch die Maßnahme der Erfindung, die bei der mechanischen Vorentwässerung anfallenden feinkörnigen Filterkuchen in einem mit Heißgas von etwa 340°C bis 550°C aus dem Zyklon-Schwebegas-Wärmetauschersystem des Drehrohrofens beaufschlagten statischen Stufentrockner auf eine Restfeuchte von 0,5 bis 1,0 % zu trocknen, wird mit konstruktiv einfachen Mitteln und mit niedrigen Betriebskosten ein für die Aufgabe in die Zyklonwärmetauscher geeignetes Rohmehl erhalten.

Der Stufentrockner ist mit zwei vom schachtförmigen Gehäuse umschlossenen und zwischen sich eine Sicht- und Trockenzone bildenden sowie vom Heißgas im Querstrom durchströmten Sicht-und Trockenzonenbegrenzungswänden ausgestattet, die schräg nach unten in Richtung zur Austragsöffnung für abgetrenntes ggf. noch feuchtes Grobgut geneigte kaskadenartig bzw. jalousieartig angeordnete Leitbleche aufweisen, wobei die beiden Leitblechwände und damit die dazwischen liegende Sicht- und Trockenzone mit einem von der Vertikalen abweichenden Winkel schrägliegend angeordnet sind.

Das zur Trocknung benötigte Heißgas wird mit Temperaturen etwa zwischen 340°C bis 550°C an einer geeigneten Stelle den Zyklonwärmetauschern des Drehrohrofens entnommen, weshalb der Stufentrockner auch für diese Temperaturen ausgelegt ist. Das Heißgas wird seitlich über eine entsprechende Öffnung in den Stufentrockner eingeführt, durchströmt dessen Sicht- und Trockenzone zunächst im Querstrom und verläßt dann an der anderen Seite der Trockenzone z. B. über eine obere Öffnung den Stufentrockner, nun beladen mit getrocknetem Rohmehl.

Die Trocknung im Stufentrockner geschieht in folgender Weise. Der Fillterkuchen aus der mechanischen Entwässerung, insbesondere Filterpresse wird über eine Filterkuchentransportvorrichtung zu der im oberen Teil des Stufentrockners angeordneten Eintragsöffnung, die mit einer mechanischen Zerkleinerungsvorrichtung wie z. B. einer Haspel versehen ist, zugeführt und dort grobstückig zerkleinert. Die Filterkuchenstücke gelangen dann in die Sicht- und Trockenzone des Stufentrockners und kommen dort mit dem Heißgas in Kontakt. Durch die plötzlich einsetzende Verdampfung werden die Filterkuchenstücke auseinandergesprengt und somit weiter zerkleinert. Das zerkleinerte Material fällt mit Schwerkraft über die kaskadenförmig ausgebildeten Stufen des Stufentrockners nach unten und wird dabei durch das Heißgas weiter getrocknet. Das dabei erhaltene getrocknete Feingut-Rohmehl mit einer Restfeuchte von z. B. 0,5 bis 1,0 % wird gemeinsam mit dem Heißgas und den gebildeten Brüden im Stufentrockner seitlich bzw. nach oben abgeführt und dann am oberen Ende des Stufentrockner aus diesem ausgeschleust. In einem dem Stufentrockner nachgeschalteten Zyklon-Vorabscheider erfolgt eine Abtrennung des getrockneten Feingutes vom Heißgas und den gebildeten Brüden; das Feingut wird über eine Rohmehltransportvorrichtung in das Zyklon-Schwebegas-Wärmetauschersystem eingespeist, während das abgetrennte Gas (Heißgas und Brüden) über ein Gebläse einer Entstaubung zugeführt wird.

Die nach dem Trocknungsvorgang noch vorhandenen gröberen Rohmaterialanteile, die ggf. noch nicht auf die erforderliche Restfeuchtigkeit getrocknet sind, werden im Stufentrockner mittels Schwerkraft nach unten gefördert und durch eine Austragsöffnung ausgetragen. Um einen möglichst geringen Druckverlust im Stufentrockner einzuhalten ist die Austragsöffnung dabei mit einer Schleuse, beispielsweise einer Doppelpendelklappe, versehen. Über Fördereinrichtungen (beispielsweise Tranportbänder, Becherwerk) wird dann das vom übrigen Materialstrom abgetrennte noch feuchte Grobgut dem Stufentrockner gemeinsam mit Frischgut wieder aufgegeben.

Weitere Einzelheiten, Vorteile und Merkmale der Erfindung werden nachfolgend an einem in einer schematischen Zeichnungsfigur dargestellten Ausführungsbeispiel näher erläutert.

In der Zeichnungsfigur ist eine erfindungsgemäße Anlage zur Herstellung von Zementklinker mit Einsatz eines Stufentrockners in einem Fließschema dargestellt.

Aus einem Silo 1 wird über eine Transportvorrichtung 2 der in der Naßmahlanlage (die Naßmahlanlage ist nicht dargestellt) hergestellte Rohmehlschlamm in eine mechanische Entwässerungseinrichtung 3 beispielsweise Kammerfilterpresse gefördert, in der eine Entwässerung auf eine Materialfeuchte von etwa 20 % durchgeführt wird. Der erhaltene Filterkuchen wird dann mittels einer weiteren Transportvorrichtung 2' zu einer oberhalb der Feuchtgut-Eintragsöffnung 4 eines Stufentrockners 10 angeordneten Zerkleinerungsvorrichtung 19, beispielsweise eine Haspel, gefördert, dort grobstückig zerkleinert und dann in den im Patentanspruch 1 charakterisierten Stufentrockner 10 eingespeist. In diesem statischen Kaskaden-Stufentrockner 10 erfolgt nun eine Trocknung bei gleichzeitigem Aufschluß und Sichtung der grobstückigen Filterkuchenstückchen auf ein Produkt mit Rohmehlfeinheit und einer Restfeuchte von etwa 0,5 bis 1,0 %. Dieses für die weitere Verarbeitung als Zementrohmehl geeignete Material verläßt den Stufentrockner 10 über eine Abgasleitung 9 gemeinsam mit dem Heißgas und den während der Trocknung gebildeten Brüden, wird in einem dem Stufentrockner 10 nachgeschalteten Zyklon-Vorabscheider 16 vom Heißgas und den Brüden abgetrennt und gelangt als Rohmehl über den Feingutaustrag 17 des Zyklon-Vorabscheiders 16 und über eine Rohmehltransportvorrichtung 12, beispielsweise ein Transportband, in das dem Drehrohrofen 15 materialflußseitig vorgeschaltete Zyklonschwebegas-Wärmetauschersystem 13. Das vom Rohmehl getrennte Heißgas und die gebildeten Brüden treten an der Gasaustrittsöffnung 18 des Zyklonvorabscheiders 16 aus und werden mit Hilfe eines Gebläses 11 einer Entstaubung (nicht dargestellt) zugeführt.

Die im Stufentrockner 10 noch nicht vollständig aufgeschlossenen und deshalb ggf. noch feuchten Fiterkuchenstückchen gelangen durch Schwerkraft zu einer unteren, mit einer Schleuse ausgebildeten Austragsöffnung 5 und werden nach ihrem mit Hilfe der Schleuse gasdichtem Austrag aus dem Stufentrockner 10 über geeignete Fördermittel, beispielsweise ein Grobguttransportband 6, ein Becherwerk 7 und ein weiteres Grobguttransportband 8, über die Zerkleinerungsvorrichtung 19 in den Stufentrockner 10 in einem geschlossenen Kreislauf zurückgefördert.

Das zur Trocknung benötigte Heißgas wird über eine Heißgasleitung 14 den Zyklonwärmetauschern 13 entnommen und seitlich etwa im Querstrom in den Stufentrockner 10 gefördert und verläßt diesen dann, beladen mit Brüden und dem fertig aufgeschlossenen und getrockneten Rohmehl, mit Hilfe des Gebläses 11 wie weiter oben beschrieben über die Abgasleitung 9.

Die Erfindung ist nicht auf das dargestellte Ausführungsbeispiel beschränkt, sondern läßt sich erfindungsgemäß entsprechend den vorliegenden Materialeigenschaften (beispielsweise der Feuchte und der Korngröße) sowie den vorliegenden örtlichen Gegebenheiten entsprechend in der Auswahl der Anlagenkomponenten variieren, wenn ein Stufentrockner zur thermischen Trocknung des Zementrohmehls eingesetzt wird.

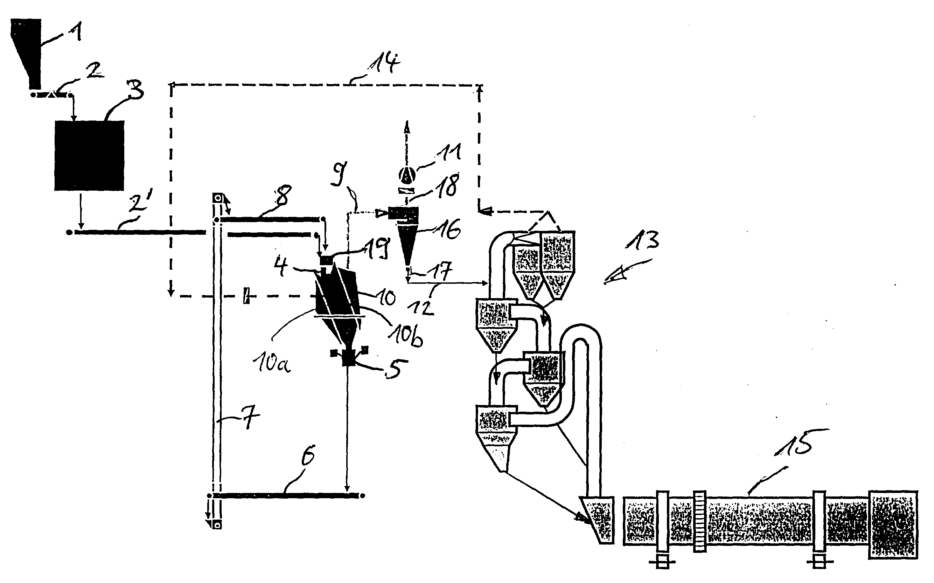

## Patentansprüche

1. Anlage zur Herstellung von Zement Zementklinker aus nassen schlammförmigen Rohmaterialien, die mechanisch entwässert, getrocknet, in einem Zyklonschwebegas-Wärmetauschersystem erhitzt, in einer Calcinierstufe calciniert, in einem Drehofen zu Zementklinker gebrannt und in einem Klinkerkühler gekühlt werden,
dadurch gekennzeichnet, daß die Trocknungseinrichtung zur thermischen Trocknung der mechanisch entwässerten Rohmaterialien aus einem statischen Kaskaden-Stufentrockner (10) besteht mit zwei vom schachtförmigen Gehäuse umschlossen und zwischen sich eine Sicht- und Trockenzone bildenden sowie von Heißgas (14) des Zyklon-Schwebegas-Wärmetauschersystem (13) durchströmten Sicht- und Trockenzonenbegrenzungswänden, die schräg nach unten in Richtung zur Austragsöffnung (5) für abgetrenntes ggf. noch feuchtes Grobgut geneigte kaskadenartig bzw. jalousieartig angeordnete Leitbleche aufweisen, wobei die beiden Leitblechwände (10a, 10b) und damit die dazwischen liegende Sicht- und Trockenzone mit einem von der Vertikalen abweichenden Winkel schräg liegend angeordnet sind.

2. Anlage nach Anspruch 1,
dadurch gekennzeichnet, daß der Stufentrockner (10) für Heißgastemperaturen von etwa 340°C bis 550°C ausgelegt ist.

3. Anlage nach Anspruch 1 oder 2,
dadurch gekennzeichnet, daß der Stufentrockner (10) an seiner unteren Austragsöffnung als Schleuse (5) ausgebildet ist, durch die noch feuchtes Grobgut ausgetragen und über Fördereinrichtungen (6,7,8) zur Feuchtgut- Eintragsöffnung (4) des Stufentrockners (10) zurückgeführt ist.

4. Anlage nach einem der Ansprüche 1 bis 3,
dadurch gekennzeichnet, daß oberhalb der Feuchtgut-Eintragsöffnung (4) des Stufentrockners (10) eine Zerkleinerungsvorrichtung (19) angeordnet ist.

5. Anlage nach einem oder mehreren der Ansprüche 1 bis 4,
dadurch gekennzeichnet, daß der Stufentrockner (10) über eine Abgasleitung (9) mit einem Zyklon-Vorabscheider (16) verbunden ist, dessen Feingutaustrag (17) über eine Rohmehltransportvorrichtung (12) mit den Zyklonwärmetauschern (13) des Drehrohrofens (15) und dessen Gasaustrittsöffnung (18) über ein Gebläse (11) mit einer Entstaubungsanlage für das vom Feingut abgetrennte Gas (Heißgas und Brüden) verbunden ist.

6. Verfahren zum Betrieb der Anlage nach den Ansprüchen 1 bis 5,
gekennzeichnet durch eine Trocknung von naßmechanisch auf Rohmehlfeinheit zerkleinertem und auf eine Restfeuchte von ca. 20 % mechanisch vorentwässertem Rohmaterial im Stufentrockner (10) mit Heißgas (14) aus den Zyklonwärmetauschern (13) des Drehrohrofens (15), wobei feuchtes Grobgut aus dem Stufentrockner (10) ausgeschleust und in einem geschlossenen Kreislauf in den Stufentrockner (10) zurückgeführt und das ausreichend getrocknete Feingut mit einer Restfeuchte von vorzugsweise etwa 0,5 bis 1,0 % nach Abtrennung vom Heißgas und den bei der Trocknung gebildeten Brüden einem Zyklon-Vorabscheider (16) als Rohmehl den Zyklonwärmetauschern (13) des Drehrohrofens (15) zugeführt wird.
